# EUROPEAN PATENT APPLICATION

(11) **EP 3 352 348 A1**
(43) Date of publication of application: **25.07.2018**
(21) Application number: 16846406.3
(22) Date of filing: 12.09.2016
(51) Int. Cl.: H02K 33/16

(54) **LINEAR ACTUATOR**

(30) Priority: 14.09.2015 JP 2015180303
(71) Applicant: Nidec Sankyo Corporation, Suwa-gun, Nagano 393-8511 (JP)
(72) Inventor: TAKEDA, Tadashi, Suwa-gun Nagano 393-8511 (JP); KITAHARA, Hiroshi, Suwa-gun Nagano 393-8511 (JP); TSUCHIHASHI, Masao, Suwa-gun Nagano 393-8511 (JP)
(74) Representative: Becker Kurig Straus
(86) International application number: PCT/JP2016/076739
(87) International publication number: WO 2017/047535

(57) **Abstract**

To provide a linear actuator in which a movable element can still appropriately be driven, even in the case of a provision of a gel damper member between the movable element and a stationary element. A linear actuator 1 includes a stationary element 2, a movable element 6, a magnetic drive mechanism 5 to linearly drive the movable element 6 with respect to the stationary element 2, and a gel damper member 9 that is provided between the stationary element 2 and the movable element 6. The gel damper member 9 is held between a first part 29 in the stationary element 2, which faces toward a direction perpendicular to the driving direction by the magnetic drive mechanism 5, and a second part 69 in the movable element 6, which faces the first part 29 in a direction perpendicular to the driving direction. Therefore, when the movable element 6 is driven, the movable element 6 is deformed in a shearing direction.

## Description

### [Field of the Invention]

The present invention relates to a linear actuator that drives a movable element in an axial direction.

### [Background]

In an industrial field of mobile phones and the like, there is used a device that notifies of an incoming call and the like, by way of a vibration. And, as such a device, there can be used a linear actuator in which a movable element is supported by a stationary element by an intermediary of a spring member (refer to Patent Document 1 and Patent Document 2). In a case of a linear actuator described in Patent Document 1 and Patent Document 2, a movable element is driven in an axial direction by use of a magnet provided at a side of the movable element and a coil provided at a side of a stationary element. Unfortunately, in the case of the linear actuator described above, there exists a resonance point peak due to the spring member, and then, at the resonance point peak, there is a risk that the movable element becomes excessively displaced, so as to come into collision with the stationary element.

In the meantime, in order to control such a resonance point peak of the movable element, it is proposed that silicone gel (a gel damper member) is placed at a position sandwiched between the stationary element and the movable element in an axial direction (Patent Document 3).

### [Prior Art Documents]

### [Patent Documents]

Patent Document 1: Japanese Unexamined Patent Application Publication No. 2006-7161
Patent Document 2: Japanese Unexamined Patent Application Publication No. 2015-8573
Patent Document 3: Japanese Unexamined Patent Application Publication No. H11-44342

### [Summary of Invention]

### [Problem to Be Solved]

When the silicone gel (the gel damper member) described in Patent Document 3 is placed at the position sandwiched between the stationary element and the movable element in the axial direction in the linear actuator described in Patent Document 1 and Patent Document 2, the gel damper member elongates and contracts in accordance with a movement of the movable element in the axial direction. In such a situation, since a degree of a stress applied to the movable element by the damper greatly changes during a process of elongation/contraction of the damper, there exists an unfavorable issue, for example, that linearity in a driving performance of the movable element deteriorates, so that the movable element cannot appropriately be driven.

With the issue described above being taken into consideration, it is an objective of the present invention to provide a linear actuator in which the movable element can still appropriately be driven, even in the case of a provision of the gel damper member between the movable element and the stationary element.

### [Means to Solve the Problem]

In order to solve the issue described above, a linear actuator according to the present invention includes a stationary element, a movable element, a magnetic drive mechanism that linearly drives the movable element in relation to the stationary element, and a gel damper member provided between the stationary element and the movable element, wherein the gel damper member is held between a first part in the stationary element and a second part in the movable element. The first part faces toward a direction perpendicular to a driving direction by the magnetic drive mechanism. The second part faces the first part in a direction perpendicular to the driving direction .

In the present invention, there is provided the gel damper member between the stationary element and the movable element, and the gel damper member is held between the first part in the stationary element and the second part in the movable element. The first part faces toward the direction perpendicular to the driving direction. The second part faces the first part in the direction perpendicular to the driving direction. Therefore, when the movable element moves in the driving direction, the gel damper member is deformed in a shearing direction, so as to apply a restoring force to the movable element. In this situation, the restoring force at the time, when the gel damper member is deformed in a shearing direction, is less in its change owing to a degree of deformation, being compared to a restoring force of the gel damper member at a time of being elongated/contracted. Accordingly, a change in a degree of the restoring force that the movable element receives from the gel damper member is less, at a time when the movable element moves. Therefore, the movable element can still appropriately be driven, even in the case of a provision of the gel damper member between the movable element and the stationary element.

In the present invention, there may be applied a mode in which the gel damper member is placed in such a way as to surround a central axis line that stretches along the driving direction in the movable element. According to such a configuration, the restoring force of the gel damper member can evenly be applied to the movable element.

In the present invention, there may be applied a mode in which the gel damper member includes a plurality of gel members placed in a circumferential direction around the central axis line. According to such a configuration, the gel damper member is easily built in between the stationary element and the movable element.

In the present invention, there may be applied a mode in which the second part is an outer circumferential surface in the movable element, which faces a direction perpendicular to the driving direction, the stationary element is provided with a side plate part that faces the outer circumferential surface of the movable element, and the first part is an inner side surface in the side plate part, which faces the outer circumferential surface of the movable element.

In the present invention, there may be applied a mode in which the movable element is supported solely through an intermediary of the gel damper member by the stationary element, so as to be movable in the driving direction. According to such a configuration, there is generated no resonance owing to a spring member, being different from a case where such a spring member is employed.

In the present invention, there may be applied a mode in which a spring member is provided between the movable element and the stationary element, and the movable element is supported through an intermediary of the gel damper member and the spring member by the stationary element, so as to be movable in the driving direction. According to such a configuration, the movable element can be driven by use of a spring force of the spring member.

In the present invention, there may be applied a mode in which the magnetic drive mechanism includes a permanent magnet held by the movable element and a coil held by the stationary element.

In the present invention, there may be applied a mode in which an N-pole and an S-pole are positioned side by side in the driving direction, in the permanent magnet.

In the present invention, there may be applied a mode in which the permanent magnet includes a first magnet, in which an N-pole and an S-pole are positioned side by side in the driving direction, and a second magnet, which is provided at a neighboring position in the driving direction, and in which an N-pole and an S-pole are positioned side by side in the driving direction, and the first magnet and the second magnet have their same pole oriented toward a location between the first magnet and the second magnet. According to such a configuration, a density of magnetic field in linkage with the coil can be increased.

In this case, it is preferable that the first magnet and the second magnet are connected to each other by an intermediary of a core plate. According to such a configuration, it is easy to connect the first magnet and the second magnet at a side of the same pole, being compared to a case of directly connecting the first magnet and the second magnet.

In the present invention, there may be applied a mode in which the gel damper member is, for example, made from silicone gel.

### [Advantageous Effect of the Invention]

In the present invention, the gel damper member is provided between the movable element and the stationary element, and the gel damper member is held between the first part that faces in a direction, perpendicular to a driving direction, in the stationary element, and the second part that faces the first part in a direction, perpendicular to the driving direction, in the movable element. Therefore, when the movable element moves in the driving direction, the gel damper member is deformed in a shearing direction, so as to apply a restoring force to the movable element. In this situation, the restoring force at the time, when the gel damper member is deformed in a shearing direction, is less in its change owing to a degree of deformation, being compared to a restoring force of the gel damper member at a time of being elongated/contracted. Accordingly, a change in a degree of the restoring force that the movable element receives from the gel damper member is less, at a time when the movable element moves. Therefore, the movable element can still appropriately be driven even in the case of a provision of the gel damper member between the movable element and the stationary element.

### [Brief Description of the Drawings]

FIG. 1 is an explanatory diagram that shows an external appearance and so forth of a linear actuator according to a first embodiment of the present invention.
FIG. 2 is a sectional drawing that shows an internal structure of the linear actuator according to the first embodiment of the present invention.
FIG. 3 is an explanatory diagram that shows an external appearance and so forth of a linear actuator according to a second embodiment of the present invention.
FIG. 4 is a sectional drawing that shows an internal structure of the linear actuator according to the second embodiment of the present invention.
FIG. 5 is an explanatory drawing of a linear actuator according to a third embodiment of the present invention.

### [Description of the Preferred Embodiments]

Preferred embodiments of the present invention are explained below with reference to the drawings. Meanwhile, in the explanation below, a central axis line of a movable element 6 is represented as an axis line 'L', and there is explained a case in which the movable element 6 is driven in a direction along the axis line 'L'. In other words, a driving direction of the movable element 6 is a direction along the axis line 'L'. Then, in the explanation below, the explanation is made on the assumption that, in a direction where the axis line 'L' stretches (the driving direction), a side where a case 3 has an opening section is referred to as "one side LI" and a side where the case 3 has a closed section is referred to as "the other side L2."

### (First embodiment)

### (General configuration)

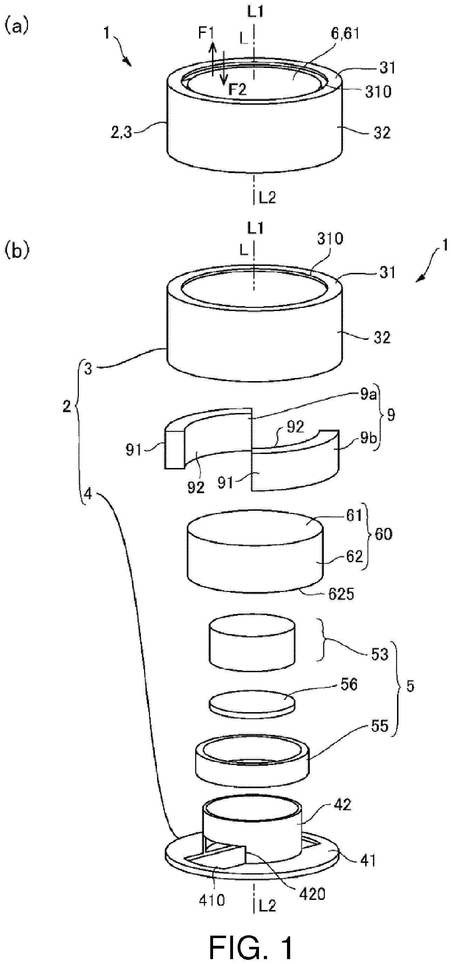

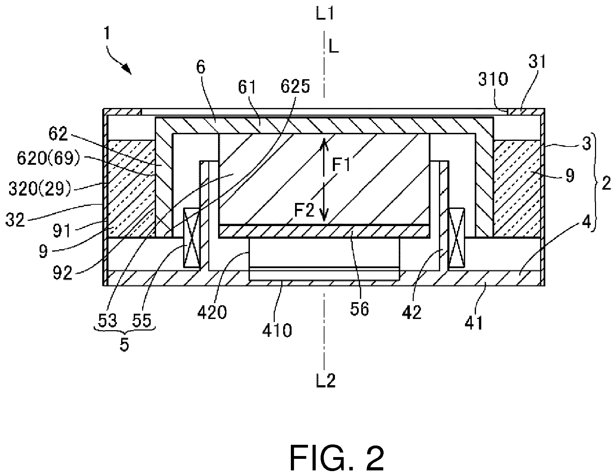

FIG. 1 is an explanatory diagram that shows an external appearance and so forth of a linear actuator 1 according to a first embodiment of the present invention, wherein FIG. 1(a) and FIG. 1(b) are a perspective view in which the linear actuator 1 is viewed from the one side L1, and an exploded perspective view in which the linear actuator 1 is viewed from the one side L1, respectively. FIG. 2 is a sectional drawing that shows an internal structure of the linear actuator 1 according to the first embodiment of the present invention.

As shown in FIG. 1 and FIG. 2, the linear actuator 1 according to the present embodiment includes a stationary element 2, a movable element 6, and a magnetic drive mechanism 5 to linearly drive the movable element 6 with respect to the stationary element 2 along the axis line 'L'. The magnetic drive mechanism 5 includes a permanent magnet 53 held by the movable element 6 and a coil 55 held by the stationary element 2. Although not being illustrated, an end part of the coil 55 is connected to a wiring component, such as a flexible wiring substrate, and then the coil 55 is externally supplied with electricity by way of the flexible wiring substrate and so forth.

The linear actuator 1 includes a gel damper member 9 that is provided between the stationary element 2 and the movable element 6. In the present embodiment, the linear actuator 1 is not provided with a spring member and the like, between the stationary element 2 and the movable element 6, and then the movable element 6 is supported by the stationary element 2, through only an intermediary of the gel damper member 9, in such a way as to be movable in a direction of the axis line 'L'.

### (Configuration of the stationary element 2)

The stationary element 2 includes a case 3 being cylindrical, and a holder 4 provided with a bottom plate part 41 that blocks off an opening part of the case 3, at the other side L2 of the case 3 in the direction of the axis line 'L'. The case 3 is shaped to be cylindrical, and meanwhile the bottom plate part 41 of the holder 4 is shaped to be circular. The case 3 includes an end plate part 31, which is shaped to be circular and positioned at the one side L1 in the direction of the axis line 'L', and a side plate part 32, which is shaped to be cylindrical and extends from an outer edge of the end plate part 31 toward the other side L2 in the direction of the axis line 'L'. Meanwhile, a part, where the axis line 'L' passes through in the end plate part 31, is formed as an opening part 310 being circular.

The holder 4 has a cylindrical part 42 that protrudes from a center of the bottom plate part 41 toward the one side L1 in the direction of the axis line 'L', and at a root section of the cylindrical part 42, there are formed opening parts 420 at two locations, which are facing each other. On a surface at the one side L1 of the bottom plate part 41 in the direction of the axis line 'L', there is formed a concave part 410 that extends through the opening parts 420, beyond an external side of the cylindrical part 42. An outer diameter of the cylindrical part 42 is smaller than an inner diameter of the side plate part 32 of the case 3. Therefore, the cylindrical part 42 is positioned at a location that is inner in a radial direction than the side plate part 32 of the case 3 is. Then, the holder 4 configured in this way has its bottom plate part 41 fixed to the side plate part 32 of the case 3.

### (Configuration of the movable element 6)

The movable element 6 includes an end plate part 61 that is shaped to be circular and positioned at the one side L1 in the direction of the axis line 'L', and a torso part 62 that is shaped to be cylindrical and extends from an outer edge of the end plate part 61 toward the other side L2 in the direction of the axis line 'L'. Meanwhile, an outer diameter of the torso part 62 is smaller than an inner diameter of the opening part 310 of the case 3. Therefore, the torso part 62 is positioned at a location that is inner in a radial direction than the side plate part 32 of the case 3 is. Moreover, the outer diameter of the torso part 62 is smaller than the inner diameter of the opening part 310 of the case 3. Therefore, the movable element 6 does not collide with the case 3, even at a time of moving in the direction of the axis line 'L'. Moreover, the outer diameter of the torso part 62 is larger than the outer diameter of the cylindrical part 42 of the holder 4. Accordingly, the torso part 62 is positioned at an outer side in a radial direction than the cylindrical part 42 of the holder 4 is.

### (Configuration of the magnetic drive mechanism 5)

In the magnetic drive mechanism 5, being inside the torso part 62 of the movable element 6, the permanent magnet 53 is fixed to a surface of the end plate part 61 at the other side L2 in the direction of the axis line 'L' by means of adhesion and the like. The permanent magnet 53 is cylindrically shaped, and the permanent magnet 53 is magnetized in such a way that an N-pole and an S-pole are positioned side by side in the direction of the axis line 'L' (the driving direction). To a surface of the permanent magnet 53 at the other side L2 in the direction of the axis line 'L', there is connected a core plate 56 being disk-like shaped, by means of adhesion and the like. The movable element 6 is made of a magnetic metal, and serves as a yoke.

The coil 55 is held around a side close to the bottom plate part 41 (a root side), within an outer circumferential surface of the cylindrical part 42 of the holder 4, and being located inside the torso part 62 of the movable element 6, the coil 55 faces the core plate 56 at an outer side in a radial direction. In the meantime, an end part 625 of the torso part 62 of the movable element 6 is positioned at an opposite side to the core plate 56 with respect to the coil 55. In other words, the end part 625 of the torso part 62 of the movable element 6 faces the core plate 56 across the coil 55.

A configuration, which includes winding a coil into a cylinder-like form and subsequently fixing the coil to an outer circumferential surface of the cylindrical part 42, can be applied to the coil 55, and another configuration, which includes winding a coil wire around the outer circumferential surface of the cylindrical part 42, can also be applied.

### (Configuration of the gel damper member 9)

The gel damper member 9 is held between a first part 29 in the stationary element 2, which faces toward a direction perpendicular to the driving direction by the magnetic drive mechanism 5 (the direction of the axis line 'L'), and a second part 69 in the movable element 6, which faces the first part 29 in a direction perpendicular to the driving direction (the direction of the axis line 'L'). In the present embodiment, the second part 69 is an outer circumferential surface 620 that faces toward an outer side in a radial direction in the torso part 62 of the movable element 6. The first part 29 is an inner circumferential surface 320 (an inner side surface in the side plate part 32, which faces the outer circumferential surface 620 of the movable element 6) that faces toward an inner side in a radial direction in the side plate part 32 of the case 3 used in the stationary element 2. In other words, in the gel damper member 9, one side surface 91 (outer side surface) is connected to the inner circumferential surface 320 of the side plate part 32 of the case 3, and meanwhile the other side surface 92 (inner side surface), positioned at a location opposite to the one side surface 91, is connected to the outer circumferential surface 620 of the movable element 6. A means by use of adhesion and the like is applied to connection of the one side surface 91 of the gel damper member 9 and the inner circumferential surface 320 of the side plate part 32 of the case 3, and meanwhile a means by use of adhesion and the like is applied to connection of the other side surface 92 of the gel damper member 9 and the outer circumferential surface 620 of the movable element 6.

In this situation, the gel damper member 9 is placed in such a way as to surround the axis line 'L' (the central axis line of the movable element 6). Moreover, as shown in FIG. 1, the gel damper member 9 includes a plurality of gel members placed in a circumferential direction around the axis line 'L', for example, two gel members 9a and 9b. Each of the gel members 9a and 9b is a plate member that is curved in an arc-like form, so as to be shaped along the inner circumferential surface 320 of the side plate part 32 of the case 3 and the outer circumferential surface 620 of the movable element 6, the form spreading out in a circular arc angle range of about 90 degrees.

In the present embodiment, the gel damper member 9 is made from silicone gel having a needle entering level of 90 to 110. The needle entering level shows a value of an entered depth of a 1/4-cone needle stressed for five seconds, with a total load of 9.38 grams at 25 degrees Celsius, as specified in JIS-K-2207 or JIS-K-2220, wherein the entered depth being expressed in 1/10 mm. The smaller the value is, the harder the material is.

### (Movement and primary effect of the present embodiment)

In the linear actuator 1 according to the present embodiment, while energizing the coil 55 is halted, the movable element 6 is located at an origin position where a mass of the movable element 6 is balanced with a shape maintaining force of the gel damper member 9. Then, if the coil 55 is supplied with a sine wave, a reverse pulse, or the like under the condition, the movable element 6 receives a driving force by the magnetic drive mechanism 5 in such a way as to move toward one side 'LI' in the direction of the axis line 'L', against the shape maintaining force of the gel damper member 9, as shown with an arrow F1. As a result of that, the gel damper member 9 gets deformed in a shearing direction. A moving displacement stroke of the movable element 6 at the time is determined according to a current value of an electric current supplied to the coil 55 and a restoring force of the gel damper member 9. Then, at a time when energizing the coil 55 is halted, the movable element 6 returns to the origin position by way of the restoring force of the gel damper member 9.

Then, if the coil 55 is supplied with a sine wave, a reverse pulse, or the like that has a reverse polarity, the movable element 6 receives a driving force by the magnetic drive mechanism 5 in such a way as to move toward the other side 'L2' in the direction of the axis line 'L', against the shape maintaining force of the gel damper member 9, as shown with an arrow F2. As a result of that, the gel damper member 9 gets deformed in a shearing direction. A moving displacement stroke of the movable element 6 at the time is determined according to a current value of an electric current supplied to the coil 55 and a restoring force of the gel damper member 9. Then, at a time when energizing the coil 55 is halted, the movable element 6 returns to the origin position by way of the restoring force of the gel damper member 9.

By way of repeating a drive operation in this way, the movable element 6 vibrates in the direction of the axis line 'L'. A frequency of the vibration at the time is determined according to a frequency of the electric current to be supplied to the coil 55. Therefore, an intensity level and a frequency of the vibration are variable. Incidentally, the movable element 6 may be vibrated in the direction of the axis line 'L', by way of consecutively alternating a polarity of a signal to be supplied to the coil 55. Still in this case, a moving displacement stroke of the movable element 6 is determined according to a current value of an electric current supplied to the coil 55 and a restoring force of the gel damper member 9.

In this situation, the gel damper member 9 is held between the first part 29 in the stationary element 2, which faces toward the direction perpendicular to the driving direction by the magnetic drive mechanism 5 (the direction of the axis line 'L'), and the second part 69 in the movable element 6, which faces the first part 29 in the direction perpendicular to the driving direction (the direction of the axis line 'L'). Therefore, when the movable element 6 is driven, the gel damper member 9 is deformed in a shearing direction so that the restoring force is applied to the movable element 6. On the other hand, in the case where the gel damper member 9 is placed between sections, which face each other in the moving direction in the stationary element 2 and the movable element 6, the gel damper member 9 is elongated/contracted at a time when the movable element 6 is driven. In this situation, the restoring force at the time, when the gel damper member 9 is deformed in a shearing direction, is less in its change owing to a degree of deformation, being compared to the restoring force at the time when the gel damper member 9 is elongated/contracted. Accordingly, a change in a degree of the restoring force that the movable element 6 receives from the gel damper member is less, at a time when the movable element 6 moves. Therefore, the movable element 6 can still appropriately be driven, even in the case of a provision of the gel damper member 9 between the movable element 6 and the stationary element 2.

Moreover, the gel damper member 9 is placed in such a way as to surround the axis line 'L' (the central axis line of the movable element 6), so that the restoring force of the gel damper member 9 can evenly be applied to the movable element 6. Therefore, the movable element 6 is unlikely to get tilted. Furthermore, since the gel damper member 9 includes the plurality of gel members 9a and 9b that are placed in the circumferential direction around the axis line 'L', it is easy to provide the gel damper member 9 between the stationary element 2 and the movable element 6.

Moreover, the movable element 6 is supported solely through an intermediary of the gel damper member 9 by the stationary element 2, so as to be movable in the direction of the axis line 'L' (the driving direction). Accordingly, there is generated no resonance owing to a spring member, being different from a case where such a spring member is employed.

Furthermore, the gel damper member 9 absorbs a vibration of the movable element 6, while getting deformed in association with a movement of the movable element 6. Therefore, unwanted vibration of the movable element 6 can be controlled. Moreover, the gel damper member 9 is provided with a needle entering level of 90 to 110. Accordingly, the gel damper member 9 has sufficient elasticity to fulfill a function as a damper, and furthermore there is unlikely a chance that the gel damper member 9 gets broken and scattered. Still further, since the gel damper member 9 is fixed by way of adhesion to both the movable element 6 and the stationary element 2, it is possible to prevent the gel damper member 9 from shifting in association with a movement of the movable element 6.

In the meantime, the movable element 6 is provided with one set of the permanent magnet 53 being cylindrical, and meanwhile the coil 55 is wound around in the stationary element 2, at the cylindrical part 42 of the holder 4 that surrounds the permanent magnet 53 at an outside position in a radial direction. Therefore, the permanent magnet 53 and the coil 55 can individually have a large diameter. Meanwhile, the permanent magnet 53 is provided with the core plate 56 and the end plate part 61 (yoke) at both sides in the direction of the axis line 'L', and then the end part 625 of the torso part 62 of the movable element 6 faces the core plate 56 across the coil 55. Accordingly, a density of magnetic flux in linkage with the coil 55 is high so that, even with a simple configuration provided with the permanent magnet 53 being a single set, a great thrust force can be supplied to the movable element 6.

### (Second embodiment)

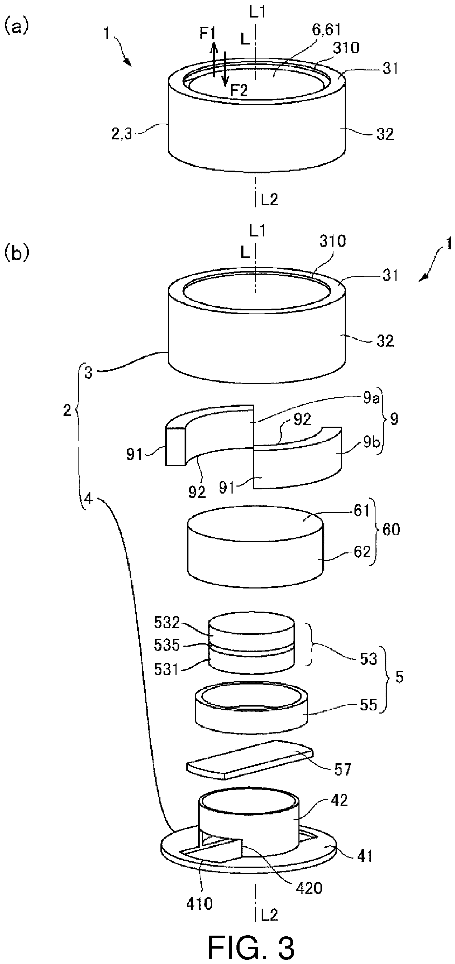

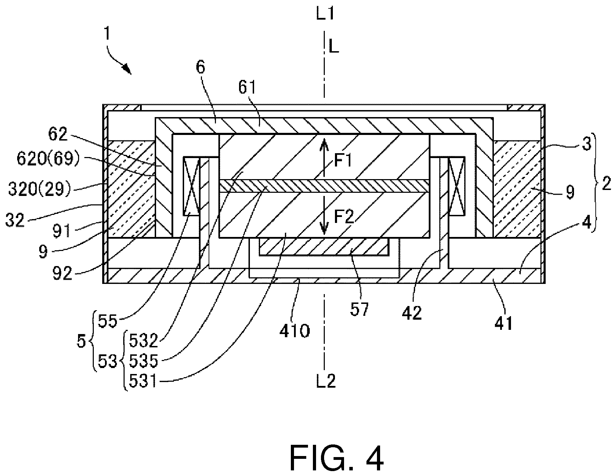

FIG. 3 is an explanatory diagram that shows an external appearance and so forth of a linear actuator 1 according to a second embodiment of the present invention, wherein FIG. 3(a) and FIG. 3(b) are a perspective view in which the linear actuator 1 is viewed from the one side L1, and an exploded perspective view in which the linear actuator 1 is viewed from the one side L1, respectively. FIG. 4 is a sectional drawing that shows an internal structure of the linear actuator 1 according to the second embodiment of the present invention. Incidentally, a fundamental configuration of the present embodiment is the same as a configuration of the first embodiment, and therefore a common symbol is provided to each common part, and an explanation for such a part is omitted.

As shown in FIG. 3 and FIG. 4, the linear actuator 1 according to the present embodiment also includesa stationary element 2, a movable element 6, and a magnetic drive mechanism 5 to linearly drive the movable element 6 with respect to the stationary element 2 along the axis line 'L', in the same way as the first embodiment shows. The magnetic drive mechanism 5 includes a permanent magnet 53 held by the movable element 6 and a coil 55 held by the stationary element 2.

The linear actuator 1 is provided with the gel damper member 9 between the stationary element 2 and the movable element 6. In the present embodiment, the linear actuator 1 is not provided with a spring member and the like, between the stationary element 2 and the movable element 6, and then the movable element 6 is supported by the stationary element 2, through only the intermediary of the gel damper member 9, in such a way as to be movable in a direction of the axis line 'L'. The gel damper member 9 is held between a first part 29 in the stationary element 2, which faces toward a direction perpendicular to the driving direction by the magnetic drive mechanism 5 (the direction of the axis line 'L'), and a second part 69 in the movable element 6, which faces the first part 29 in a direction perpendicular to the driving direction (the direction of the axis line 'L'). In the present embodiment, the second part 69 is an outer circumferential surface 620 that faces toward an outer side in a radial direction in the torso part 62 of the movable element 6, and meanwhile, the first part 29 is an inner circumferential surface 320 (an inner side surface in the side plate part 32, which faces the outer circumferential surface 620 of the movable element 6) that faces toward an inner side in a radial direction in the side plate part 32 of the case 3 used in the stationary element 2.

### (Configuration of the magnetic drive mechanism 5)

In the magnetic drive mechanism 5, being inside the torso part 62 of the movable element 6, the permanent magnet 53 is fixed to a surface of the end plate part 61 at the other side L2 in the direction of the axis line 'L' by means of adhesion and the like. The permanent magnet 53 is cylindrically shaped, and the permanent magnet 53 is configured in such a way that an N-pole and an S-pole are positioned side by side in the direction of the axis line 'L' (the driving direction).

In the present embodiment, the permanent magnet 53 includes a first magnet 531, in which an N-pole and an S-pole are positioned side by side in the direction of the axis line 'L' (the driving direction), and a second magnet 532 provided at a neighboring position of one side L1 in the direction of the axis line 'L' (the driving direction), wherein an N-pole and an S-pole are positioned side by side in the second magnet 532 as well, in the direction of the axis line 'L' (the driving direction), in the same way as they are in the first magnet 531. In the present embodiment, the first magnet 531 and the second magnet 532 have their same pole oriented toward a location between the first magnet 531 and the second magnet 532. Moreover, the first magnet 531 and the second magnet 532 are connected to each other through the intermediary of a core plate 535 being circular-shaped, by means of adhesion and the like.

To a surface of the permanent magnet 53, configured in this way, at the other side L2 in the direction of the axis line 'L', there is connected a core plate 57 by means of adhesion and the like. In the meantime, the core plate 57 has a shape that is almost the same as the concave part 410 formed in the bottom plate part 41 of the holder 4, wherein the planar size of the core plate 57 is smaller than the planar size of the concave part 410 formed in the bottom plate part 41 of the holder 4.

The coil 55 is held around an end part at one side L1 in the direction of the axis line 'L', within an outer circumferential surface of the cylindrical part 42 of the holder 4, and being located inside the torso part 62 of the movable element 6, the coil 55 faces the core plate 535 at an outer side in a radial direction. In the meantime, the torso part 62 of the movable element 6 is positioned at an opposite side to the core plate 535 with respect to the coil 55. In other words, the torso part 62 of the movable element 6 faces the core plate 56 across the coil 55.

In the same way as described in the first embodiment, in the linear actuator 1 according to the present embodiment as well, if the coil 55 is supplied with a sine wave, a reverse pulse, or the like, the movable element 6 receives a driving force by the magnetic drive mechanism 5 in such a way as to vibrate in the direction of the axis line 'L', against the shape maintaining force of the gel damper member 9. Meanwhile, the gel damper member 9 gets deformed in a shearing direction. Then, a moving displacement stroke of the movable element 6 at the time is determined according to a current value of an electric current supplied to the coil 55 and a restoring force of the gel damper member 9.

In this situation, the gel damper member 9 is held between the first part 29 in the stationary element 2, which faces toward the direction perpendicular to the driving direction by the magnetic drive mechanism 5 (the direction of the axis line 'L'), and the second part 69 in the movable element 6, which faces the first part 29 in the direction perpendicular to the driving direction (the direction of the axis line 'L'). Therefore, when the movable element 6 is driven, the gel damper member 9 is deformed in a shearing direction so that the restoring force is applied to the movable element 6. Under the circumstance, the restoring force at the time, when the gel damper member 9 is deformed in a shearing direction, is less in its change owing to a degree of deformation. Accordingly, a change in a degree of the restoring force that the movable element 6 receives from the gel damper member is less, at a time when the movable element 6 moves. Therefore, a satisfactory result is produced in the same way as it is in the first embodiment, in such a way that the movable element 6 can still appropriately be driven even in the case of a provision of the gel damper member 9 between the movable element 6 and the stationary element 2.

Meanwhile, in the permanent magnet 53, the first magnet 531 and the second magnet 532 have their same pole oriented toward a location between the first magnet 531 and the second magnet 532, so that a magnetic field generated between the first magnet 531 and the second magnet 532 (at the core plate 535) has high density there. Therefore, a density of magnetic field in linkage with the coil 55 can be increased so that the magnetic drive mechanism 5 can generate a great thrust force. Moreover, since the first magnet 531 and the second magnet 532 are connected through the intermediary of a core plate 535, it is easy to connect the first magnet 531 and the second magnet 532 at a side of the same pole, being compared to a case of directly connecting the first magnet 531 and the second magnet 532.

### (Third embodiment)

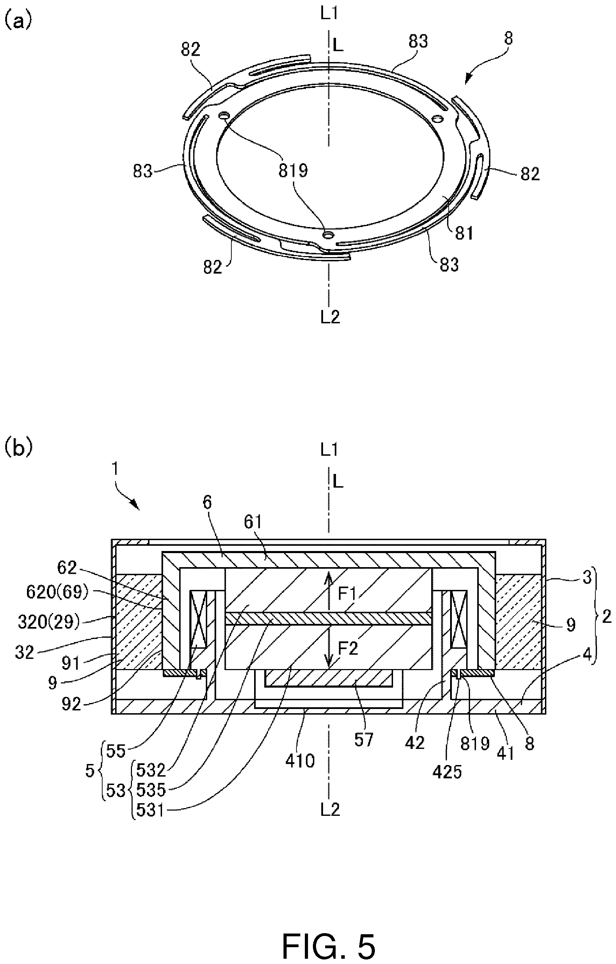

FIG. 5 is an explanatory drawing of a linear actuator 1 according to a third embodiment of the present invention, wherein FIG. 5(a) and FIG. 5(b) are a perspective view in which a spring member 8 is viewed from the one side L1, and a sectional drawing that shows an internal structure of the linear actuator 1, respectively. Incidentally, a fundamental configuration of the present embodiment is the same as a configuration of the first embodiment, and the second embodiment, and therefore a common symbol is provided to each common part, and an explanation for such a part is omitted.

In the first embodiment and the second embodiment, no spring member and the like is provided between the stationary element 2 and the movable element 6, and then the movable element 6 is supported by the stationary element 2, through only the intermediary of the gel damper member 9, in such a way as to be movable in a direction of the axis line 'L'. On the other hand, according to the present embodiment, there is provided the spring member 8 between the stationary element 2 and the movable element 6, as shown in FIG. 5, and then the movable element 6 is supported by the stationary element 2, through the intermediary of the spring member 8 and the gel damper member 9, in such a way as to be movable in a direction of the axis line 'L'.

The spring member 8 is a flat spring component provided with a stationary-element-side connection part 81 connected to the stationary element 2 (the holder 4), a movable-element-side connection part 82 connected to the movable element 6, and a plurality of arm parts 83 connected to the stationary-element-side connection part 81 and the movable-element-side connection part 82. The stationary-element-side connection part 81 is annular-shaped, and located at an inner side in a radial direction, in relation to the movable-element-side connection part 82 and the arm parts 83. The movable-element-side connection part 82 is divided into three parts in a circumferential direction, and then, the arm parts 83 individually stretch in the circumferential direction from the three movable-element-side connection parts 82.

In the stationary-element-side connection part 81, for example, there is formed a hole 819, and meanwhile, in the cylindrical part 42 of the holder 4, there is formed a protrusion 425. In a situation where the protrusion 425 is fitted into the hole 819, the stationary-element-side connection part 81 and the cylindrical part 42 are connected by means of adhesion, welding and the like. All of the three movable-element-side connection parts 82 are connected to the end part 625 of the torso part 62 of the movable element 6 by means of adhesion, welding and the like.

In the linear actuator 1 according to the present embodiment, if the coil 55 is supplied with a sine wave, a reverse pulse, or the like, the movable element 6 receives a driving force by the magnetic drive mechanism 5 in such a way as to vibrate in the direction of the axis line 'L', against a spring force of the spring member 8 and the shape maintaining force of the gel damper member 9. Meanwhile, the gel damper member 9 gets deformed in a shearing direction, and the arm parts 83 of the spring member 8 get deformed in the direction of the axis line 'L'. Then, a moving displacement stroke of the movable element 6 at the time is determined according to a current value of an electric current supplied to the coil 55, the spring force of the spring member 8, and a restoring force of the gel damper member 9.

In the case of such a configuration, at a time of vibration, sometimes the movable element 6 resonates at a frequency corresponding to a mass of the movable element 6 and a spring constant of the spring member 8. Meanwhile, according to the present embodiment, fortunately there is provided the gel damper member 9 between the stationary element 2 and the movable element 6, and therefore, the gel damper member 9 absorbs the vibration of the movable element 6, while getting deformed in association with the movement of the movable element 6. As a result, it is possible to control resonance of the movable element 6.

Incidentally, although according to the present embodiment, the spring member 8 is provided to the linear actuator 1 of the second embodiment, the spring member 8 may be provided to the linear actuator 1 according to the first embodiment.

### (Other embodiments)

Although the gel damper member 9 is fixed to the stationary element 2 and the movable element 6 by means of adhesion and the like in the embodiments described above, after providing a precursor for forming the gel damper member 9, the precursor may be turned into a gel in such a way as to fix the gel damper member 9 to the stationary element 2 and the movable element 6, by use of an adhesion force of the gel damper member 9 itself. Meanwhile, although the gel damper member 9 is configured with the two gel members 9a and 9b, placed in the circumferential direction around the axis line 'L', in the embodiments described above, the gel damper member 9 may be configured with three or more gel members. Furthermore, although the gel damper member 9 is configured with the plurality of gel members 9a and 9b placed in the circumferential direction around the axis line 'L' in the embodiments described above, the gel damper member 9 may be configured with a gel member that is continuous in the circumferential direction, so as to be annular-shaped or cylinder-like. Moreover, although the gel damper member 9 is placed in a circular form in the embodiments described above, it may be placed in a square form.

Although the coil 55 is held by the stationary element 2, and the permanent magnet 53 is held by the movable element 6 in the embodiments described above, the permanent magnet 53 may be held by the stationary element 2, and the coil 55 may be held by the movable element 6.

**[Reference Numerals]**

| | | |
|---|---|---|
| 1. linear actuator | 2. stationary element | 3. case |
| 4. holder | 5. magnetic drive mechanism | |
| 6. movable element | 8. spring member | |
| 9. gel damper member | 9a and 9b. gel members | |
| 29. first part | 32. side plate part | 42. cylindrical part |
| 53. permanent magnet | | |
| 320. inner circumferential surface of the side plate part (the first part) | | |
| 55. coil | 62. torso part | 69. second part |
| 81. stationary-element- side connection part | | |
| 82. movable-element-side connection part | | |
| 83. arm parts | 91. one side surface | 92. the other side surface |
| 531. first magnet | 532. second magnet | |
| 535. core plate | | |
| 620. outer circumferential surface of the torso part (the second part) | | |
| L. axis line | L1. one side | L2. the other side |

## Claims

1. A linear actuator, comprising:
a stationary element;
a movable element;
a magnetic drive mechanism that linearly drives the movable element in relation to the stationary element; and
a gel damper member provided between the stationary element and the movable element;
wherein the gel damper member is held between a first part in the stationary element and a second part in the movable element,
the first part faces toward a direction perpendicular to a driving direction by the magnetic drive mechanism;
the second part faces the first part in a direction perpendicular to the driving direction.

2. The linear actuator according to claim 1, wherein
the gel damper member is placed in such a way as to surround a central axis line that stretches along the driving direction in the movable element.

3. The linear actuator according to claim 2, wherein
the gel damper member includes a plurality of gel members placed in a circumferential direction around the central axis line.

4. The linear actuator according to either of claim 2 or claim 3, wherein
the second part is an outer circumferential surface in the movable element, which faces a direction perpendicular to the driving direction;
the stationary element is provided with a side plate part that faces the outer circumferential surface of the movable element; and
the first part is an inner side surface in the side plate part, which faces the outer circumferential surface of the movable element.

5. The linear actuator according to any one of claim 1 through claim 4, wherein
the movable element is supported solely through an intermediary of the gel damper member by the stationary element, so as to be movable in the driving direction.

6. The linear actuator according to any one of claim 1 through claim 4, wherein
a spring member is provided between the movable element and the stationary element; and
the movable element is supported through an intermediary of the gel damper member and the spring member by the stationary element, so as to be movable in the driving direction.

7. The linear actuator according to any one of claim 1 through claim 6, wherein
the magnetic drive mechanism includes a permanent magnet held by the movable element and a coil held by the stationary element.

8. The linear actuator according to claim 7, wherein
an N-pole and an S-pole are positioned side by side in the driving direction, in the permanent magnet.

9. The linear actuator according to claim 8, wherein
the permanent magnet includes:
a first magnet, in which an N-pole and an S-pole are positioned side by side in the driving direction; and
a second magnet, which is provided at a neighboring position in the driving direction, and in which an N-pole and an S-pole are positioned side by side in the driving direction; and
the first magnet and the second magnet have their same pole oriented toward a location between the first magnet and the second magnet.

10. The linear actuator according to claim 9, wherein
the first magnet and the second magnet are connected to each other by an intermediary of a core plate.

11. The linear actuator according to any one of claim 1 through claim 10, wherein
the gel damper member is made from silicone gel.
